# EUROPEAN PATENT SPECIFICATION

(11) **EP 1 672 899 B1**
(45) Date of publication and mention of the grant of the patent: **29.09.2010**
(21) Application number: 04106647.3
(22) Date of filing: 16.12.2004
(51) Int. Cl.: H04M 7/00, H04L 29/06

(54) **A method for deciding the network over which a communication should be routed**
Verfahren zur Auswahl des Netzwerks, über das eine Kommunikation geführt werden soll
Procédé pour choisir le réseau lequel sera utilisé pour une communication

(43) Date of publication of application: 21.06.2006
(73) Proprietor: Swisscom AG, 3050 Bern (CH)
(72) Inventor: Van Kommer, Robert, 1752 Villars-sur-Glane (CH)
(74) Representative: P&TS Patents & Technology Surveys SA

(56) References cited:
- WO-A-01/71994
- US-A1- 2003 039 242
- US-A1- 2003 086 411
- US-A1- 2003 214 940
- US-A1- 2004 057 568

## Description

### Field of the invention

The present invention relates to a method for telecommunication, and more particularly to a method for deciding if a communication should be routed over a connection-based network, for example a public land mobile network, or over a packet network, for example over the Internet.

### Description of related art

Current mobile stations, such as mobile phones, smartphones and PDAs with a cellular connection, are often provided with a first communication part for establishing voice and/or data communication over a cellular network, such as a GSM, GPRS, UMTS or CDMA network, and a second communication part for exchanging speech and/or data packets over a wireless, unlicensed personal area network (PAN), such as a Bluetooth, Wi-Fi, DECT, HomeRF or NFC (near Field Communication) network.

The cellular network part can be used for voice and data communication from any place in a territory covered by a connection-based, usually switched, public land mobile network or by visited networks with a roaming agreement.

The PAN network is mainly used for voice and data communication with peripherals in close vicinity, for example personal computers, headsets, other mobile stations, etc.

Communications over a public, connection-based network, especially a mobile network, tend to be more expensive than communications over packet networks. Communications over the private and local PAN is usually free of communication charges.

On the other end, a new trend has been the introduction of technologies that enable voice and other data to be transmitted over the Internet Protocol IP networks. Voice over IP, in short VoIP, is typically less expensive than communication over a mobile or even a fixed connection-based network, especially for long-distance calls.

Internet networks and terminals are often physically distinct and separate from mobile and fixed connection-based networks and terminals. Integration of the two kinds of networks is difficult. The phone number that is needed for reaching a recipient over the connection-based network cannot be used for communications over the Internet. A calling user has to guess what kind of equipments should be used at a particular moment for reaching the desired recipient, and often has to try different networks, from the most convenient or cheapest one to the most expensive, less convenient one, until a communication can be established.

EP-A1-1257132 describes an apparatus for integrating mobile telephones as terminals of private communication systems (PCS), for example PBXs, by building Bluetooth communications between the PCS and the mobile telephones in the vicinity. This apparatus enables for example employees at the office to use their personal mobile telephone for making calls over the office private branch exchange. This solution can only be used for users having a PBX, and does not help users to decide whether they should try to establish a communication over a connection-based network or rather over the Internet.

US-B2-6,778,824 describes another apparatus for coupling a mobile handset with a POTS device over a Bluetooth connection. The mobile handset may then be used to make or receive calls from a fixed connection-based telephony network.

US-A1-2004/0057568 describes a communication terminal unit, which has a system control section including a call destination specification information analysis section that analyzes a destination number which is assigned to a communications terminal unit at the other end and input at the time of origination of a call. On the basis of a result of analysis of the destination number performed by the call destination specification information analysis section, a call origination network determination section automatically determines to originate a call over an IP network or over a public network through use of the destination information that has been subiected to analysis and through use of selected network setting information stored in a selected network setting storage section. Selected network setting information required to automatically determine to originate a call over the IP network or over the public network is stored in the call origination network determination suction.

US-A1-2003/0214940 describes an automatic selection and establishment of a communications connection between a telephone device to a receiver device, including entering an address of a receiver device into the telephone device for initiating the communications connection to the receiver device, and automatically selecting a communications network for establishing the communications connection to the receiver device, and selecting the communications network from an internet-based network, a hybrid telephone/nternet network, and a telephone network Automatically determine network access capabilities of the receiver device based on the address of the receiver device, and automatically evaluate the cost of establishing a communications connection for each of the communications networks which the receiver device is capable of accessing. The communications network with the lowest cost is selected, automatically initiating the communications connection to the receiver device by selecting a network access device for connecting to the selected communications network, and transmitting the address of the receiver device to the selected communications network.

Other methods are known for connecting a mobile station to an Internet router over a wireless personal area network, and for establishing a voice over IP connection over this interface. The user still has to decide in advance if he wants to establish a Voice over IP connection rather than a connection over the connection-based network.

### Summary of the invention

The invention is defined by independent claim 1.

### Brief Description of the Drawings

The invention will be better understood with the help of the description of a specific embodiment illustrated by the figures in which:
Fig.1 illustrates in bloc-diagrammatic form a fist embodiment of a telecommunication system according to the invention.
Fig. 2 illustrates in bloc-diagrammatic form a second embodiment of a telecommunication system according to the invention.

### Detailed Description of the invention

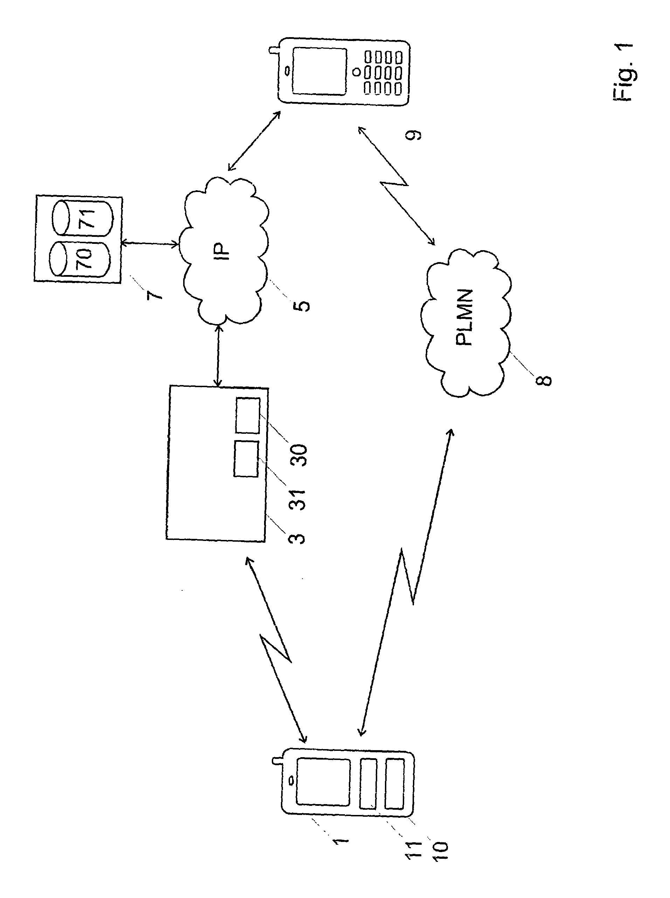

Figure 1 illustrates an embodiment of the system of the invention comprising one of a plurality of mobile stations 1, an access point 3, a called terminal, or recipient, 9 and a central directory 7.

The mobile station 1 can be a cellular telephone, a smartphone, a PDA with a cellular interface, etc. It comprises a first communication part, for example a GSM, GPRS, UMTS, CDMA, etc. module for establishing voice and/or data communication over a cellular network 8, and a second communication part, for example a Bluetooth, Wi-Fi, HomeRF, etc. for communicating with the access point 3 in the vicinity over a personal area network (PAN). In the case of a Bluetooth PAN, the mobile station 1 uses preferably a voice and/or a com (serial) profile for exchanging voice respectively data with the local access point 3. The mobile station 1 further preferably comprises a subscriber identification module 11, for example a SIM or UIM card, in which an identification of the user of the mobile station 1 is stored. A software module 10 is stored in the mobile equipment part and/or in the subscriber identification module 11 of the mobile station 1 and may be executed by this equipment for intercepting and handling call attempts by the user, as explained below. The software module 10 may be an applet Java if the mobile station respectively the SIM card contains a JAVA virtual Machine, a Symbian Program in the case of a Symbian operated mobile station, etc. In a preferred embodiment, this module 10 is installed, for example downloaded over the cellular network 8 or through a computer, by the user himself after purchase of the mobile station 1 and without replacing the firmware or any hardware part of this mobile station. The mobile station 1 may also comprise a hardware or preferably software codec (not illustrated) for coding and decoding audio streams into an IP format.

The access point 3 is preferably a general purpose computer, such as a personal computer, with a permanent access to the Internet 5 for example over an ADSL or other suitable connection, and a hardware and software wireless communication interface for communication with one or several mobile stations 1 and other devices in the vicinity over the PAN. In a preferred embodiment, the access point 3 is permanently switched on. It preferably belongs to or is administrated or at least used by the user of the mobile station 1, and is located at his home or office. An application 30 is installed in and run by the access point 3. The application 30 may include a SIP user agent, and has among others the task of continuously scanning the presence of mobile stations 1, 2, and of informing the central directory 7 each time a mobile station enters or leaves the PAN. During voice over IP communications, the access point 3 also acts as a relay between the caller 1 and the recipient 9. The software application 30 preferably identifies the mobile stations 1 in the PAN, and establishes a voice and/or data communication with this mobile station on one hand and with the central directory 7 on the other hand. The application is preferably installed by the user himself and does not belong to the operating system of the access point 3. In an embodiment, the access point 30 further comprises a hardware or preferably software codec 31 for coding and decoding audio streams into an IP format. The access point 3 may also consist of an appliance, for example an Internet router with an interface for the PAN.

In a preferred embodiment, the application software 30 for the access point 3 and the module 10 for the mobile station 1 are downloaded into the access point 3 from the central directory 7 in a single operation, and installed in the access point 3 respectively, over the personal area network, in the mobile station 1. Downloading of this material may imply an initial registration of the mobile station 1 with the central directory 7, conclusion of a subscription, capture and storage of reference biometric data, and/or exchange of pairs of cryptographic keys between the mobile station, the access point 3 and/or the central directory for ensuring a secure communication.

The recipient 9 may use another mobile station, or any other type of audio-enabled equipment connected to the Internet 5 and/or to the public land mobile network 8. In a preferred embodiment, a user identification is stored in the terminal of the recipient 9, for example in a subscriber identification module, or in any other chip card, or entered by the recipient 9, so as to permit an identification of this recipient even after an interruption of the connection or when the recipient moves.

The central directory 7 may comprise one or several servers connected to the Internet, for example web servers or servers providing web services, possibly SOAP (Simple Object Access Protocol) services, and is accessible over a permanent Internet address, for example over an URL. The directory 7 may include a database 70, for example an Oracle or SQLServer database, with a list of registered mobile stations and a list of user dependent criteria. The central directory preferably indicates, for each registered mobile equipment, its identity (for example its phone number, an alias, or a more complete identity), the presence or absence in a personal area network, and the Internet address at which the mobile station can be accessed. This address may be for example the IP address of the mobile station 1 itself, or the coordinate or IP address of the access point 3 to which the mobile station is connected over the PAN. The directory 7 may also store an equipment-dependant unique identifier (UID) used by the mobile equipment for establishing and securing a session over the personal area network. This identifier may be retrieved by the access point 3 during establishment of the wireless session with the mobile equipment.

In another embodiment, the list of criteria may be hard-coded in a program run by the directory, or stored in a non database format.

The list of criteria stored in the central directory 7 may include user independent criteria, criteria depending on calling users 1, and/or criteria depending on recipients 9. In another embodiment, only one or two of those types or criteria are provided in the central directory 7. Some criteria may be defined by the entity operating the directory 7, whereas other criteria are set or modified by users, for example over a dedicated web or wap page, using SMS or USSD for configuring those criteria, or over a voice server. Basically, the list of criteria stored in the central directory 7 is used for helping the calling user or the mobile station 1 to decide if a particular voice or data communication with a particular recipient 9 should and can be established over the Internet or over the connection-based network 8.

At least some of the following criteria may be defined for each calling mobile station and/or each recipient 9:
■ Each user may define a list of mobile stations (identified for example by their phone number) with which he prefers to communicate over the Internet or over the PLMN 8 when he is receiving a call, and possibly a different list when he is initiating a call.
■ Time periods, hours, week days, etc., during which calls over the Internet or over the PLMN are preferred. A user may decide for example to prefer calls over the Internet when he is at home, and calls over the PLMN at work, or vice-versa.
■ List of users locations at which one or the other channel is preferred. The location may be expressed for example in terms of country, PLMN cell identification, geographic coordinates, locality, or with relative terms like "at home", "at the office", "in my car", "stationary", etc. The location of the user may be determined with a satellite geolocation system, by the cellular network, or by detecting the presence of the mobile station in a specific PAN. The user may also specify criteria depending on the location of the other party, or on the distance between the two parties. For example, a user may decide to give preference to the Internet for international calls, and to the PLMN 8 for local or national calls. The preference may also depend on the mobile network in which the user, or the other party, is currently registered; an Internet communication may for example be preferred when the two users are not in the same network.

■ Communication costs, expressed for example as a price per minute. One user may decide to use Internet only when the communication cost exceeds a threshold.
■ Quality of service and data transfer rate of the internet connection. A communication over the PLMN may be preferred when the available bandwidth for the Internet connection is under a predefined threshold.
■ Quality of service and data transfer rate of the connection over the PLMN. A communication over the PLMN may be chosen for example only if a fast GPRS or UMTS network is available, whereas a VoIP communication would be preferred when only a GSM access is available.
■ Requested level of security. A communication over the PLMN may be preferred for secure communications, as indicated by the user or determined by the mobile station. However, if the Internet offers some level of security, for example when a connection over a virtual private network is possible, the Internet may still be selected.
■ Type of data or communication. A user may prefer the Internet for data communication, or for some data, and the PLMN for speech communication, or vice-versa. Another may find convenient to receive SMS over the connection-based network, and MMS or other multimedia files over the Internet.
■ Type of service accessed with the mobile equipment. A user may choose for example to use only the personal area network for retrieving his mail from an Internet mailbox, but may accept a GPRS or UMTS connection for a web session. Another user may request an Internet connection for some specific services, for example for accessing some web sites as indicated in a list, some speech-based or multimodal services, or for any other type or list of value-added services.
■ Size of the data file to transmit.
■ Default preferences of the recipient or of the calling mobile station.
■ Requested delay. A user may force a transmission over the fastest channel, for example over the PLMN, for urgent messages, as indicated by the user itself or as automatically determined by the system. A caller or a recipient may force messages marked as important or urgent to be sent over a synchronous channel, or over a network to which he is permanently connected.
■ Fidelity programs. An operator may offer a bonus to users when a certain number of messages have been sent over a particular channel, or may offer free transmission of a predefined number of messages or minutes of conversation. A user may then define that an optimal use of this fidelity program should be made.
■ Features and type of the equipment used by the calling mobile device and/or by the recipient 9. For example, a user may choose use of the connection-based network only when a UMTS communication, or a color video stream, is possible, and establish a VoIP communication in other cases.
■ Etc.

The central directory 7 may further comprise storage means, for example a voice or data mail box 71, for data and/or voice communications that have not yet reached their addressee.

When a mobile station 1 or 9 is discovered in the personal area network of an access point 3, a communication channel, for example a Wi-Fi or Bluetooth voice and/or data connection, is first established between the mobile station 1 and the access point 3, using procedures known per se. Establishment of this channel may imply mutual identification, mutual authentication and/or other security mechanisms based on values stored in or computed by the mobile equipment, in the identification module 11 or entered by the user, in order to ensure that only a reliably recognized user accesses the system. As already mentioned, the access point 3 may retrieve a mobile equipment dependant unique identifier from the central directory 7 and use this identifier for establishment of the channel over the personal area network. This identifier may be non permanent and changed by the user or automatically. The directory 7 is updated over the Internet or over the cellular network after any change.

After successful channel establishment in the PAN, the software module 10 in the mobile station 1 and/or the application software 30 run by the access point 3 then initiates the registration of the mobile station 1 with the central directory 7, by sending a communication informing the central directory of the presence of the mobile station 1 in the PAN of the access point. The communication may include the Internet address, for example the IP address, of the mobile station 1, or a mapped IP address, or only the address of the access point 3, if not already known. Criteria defined by the user of the mobile station since the last de-registration from an access point, and parameters useful for evaluating those criteria, may also be transmitted to the central directory 7.

A reliable identification and authentication by the central directory 7 is favored. In a first embodiment, the central directory entirely relies on the identification and/or authentication performed by the access point 3. A cryptographic protected application software 30 is then requested for ensuring that the result of this identification or authentication has not been forged, and that the central directory can trust the software 30. In another embodiment, identification/authentication is performed by the central directory 7 itself, preferably dialoging with the subscriber identification module 11 of the mobile station 1. The central directory 7 may for example send a challenge to which the subscriber identification module 11 is required to compute a response in order to prove its authenticity. The central directory may for example use the same authentication mechanism used in the mobile network 8 for verifying the identity of the mobile subscriber, or another mechanism implying another cryptographic application in the same subscriber module. In yet another embodiment, the identification/authentication is performed by an authentication center, for example by the authentication center of the cellular network 8, which delivers a preferably electronically signed identification/authentication result to the central directory 7.

Authentication based on biometric tests, for example on fingerprints or speaker voice identification/authentication, may also be used. Biometric user reference data, for example a reference fingerprint or reference voice models, are then stored during registration in the module responsible for the identification/authentication, for example in the central directory 7.

The system of the invention may also comprise a plurality of central directories 7, for example one directory for each mobile network 8. In this case, roaming mechanisms, using visitor directories, home directories and synchronizing means, may be used in order to provide broader service coverage.

A user leaving a PAN, or disconnected from an access point 3, is de-registered from the central directory 7, preferably by the application 30 in the access point 3, or by the central directory which may periodically test the presence of each registered mobile station. Cross-over mechanisms may be provided for automatic de-registration and re-registration in a newly entered PAN.

If a complete access point 3 becomes inaccessible, for example when it is switched off or disconnected from the Internet, all the attached mobile stations 1 are de-registered as soon as the central directory has noticed the disconnection.

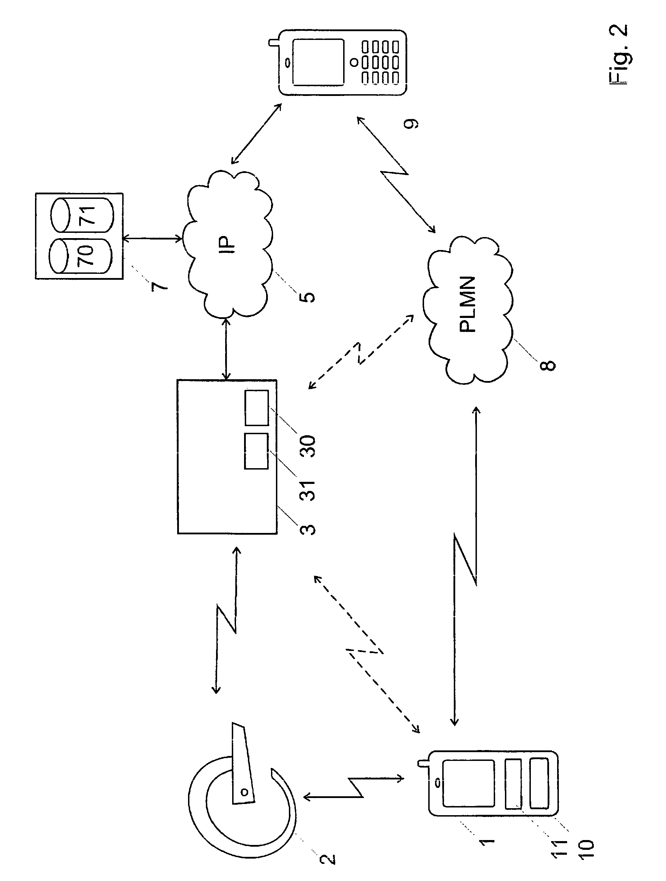

Figure 2 illustrates another embodiment of the invention in which the mobile station merely comprises a headset 2, for example a Bluetooth headset, connected over a personal area network with the access point 3 and possibly with a mobile phone 1. The headset 2 may establish a voice channel with the access point 3 and, through this access point, a voice over IP connection with the desired recipient 9. A switched connection over the connection-based network is possible over the mobile phone 1, either directly, or through the access point 3.

In this embodiment, the access point 3 preferably comprises a speech-to-text conversion system for converting speech orders, including spelled phone numbers, text messages, and call establishment orders, and for executing those orders. The speech-to-text conversion system may be a part of the application 30 installed by the user, or user independent modules. User identification/authentication is preferably based on a smart card in the access point 3, or on biometric parameters, for example on speaker recognition performed by the access point 3, by the central directory 7 and/or by an independent authentication center.

We will now describe an embodiment of a speech call establishment originating from the mobile station 1. Call establishment is initiated by the user of the mobile station entering the phone number of the desired recipient in his mobile station, and entering a call establishment command, for example by pushing the taste "OK" or "CALL" . In the embodiment of figure 2, call establishment is initiated by a voice command, for example "CALL + 4 -1 -3-2-7-2-4-9-6-6-0, interpreted in the access point 3. Other voice commands may be spoken or spelled by the user for requesting a specific type of connection; example of appropriate orders may include "LOW-COST CALL", "SECURED CALL", "VoIP CALL", "Cellular CALL", etc.

A call control routine, as part of the module 10 installed by the user, intercepts the call attempt. In the embodiment of Figure 2, call attempt interception will be performed by the access point 3. The module 10 then starts the process of deciding if the call should be established over the connection-based network 8 or as a voice over IP communication over the Internet 5.

For this, the module 10 may first check default settings stored in the mobile station 1 or in the subscriber identification module 11, or other user indications entered during the call attempt. For example, a user may enter in his mobile station instructions to prevent any attempt to build a voice over IP communication. The possibility to build a communication over this channel may also depend on a mobile subscription type, or on a prepaid account which may be stored in the mobile station or in the subscriber identification module 11. Moreover, a prepaid subscriber whose prepaid account in the subscriber identification module is empty, or a subscriber in a visited network without any roaming agreement with his home mobile network, or a user in an area not covered by the cellular network, may be prevented from building any communication over the connection-based network 8, and does not have any other possibilities than to try establishing a VoIP communication. An immediate network decision may also be made based on the called subscriber, or type of called subscriber; a user may for example force international calls to be carried out over the Internet, and national calls over the connection-based network 8.

If, after this preliminary internal check, the possibility to build a communication over the Internet remains open, the module 10 first checks if the mobile station is connected with an access point 3 in the local personal area network, and if this access point is itself connected to the Internet and has all the required software and hardware components installed and running. If those conditions are not met, a voice over IP cannot be established over the access point 3, and the call control module in the mobile station 10 initiates a conventional call over the network 8.

If, on the other hand, the mobile station 1 is connected to a running access point, a dialog is initiated with the central directory 7 in order to determine if a voice over IP communication with the requested recipient is possible and desirable. An identification and authentication of the mobile station 1 is requested during this dialog, if those steps have not been performed earlier.

The access point 3 may also determine if the requested recipient 9 is present in the same personal area network. In this case, a direct communication between the caller 1 and the recipient 9 over the personal area network may be established, for example a direct voice communication over a voice Bluetooth channel, or a Voice over IP communication over a data channel in a Bluetooth or Wi-Fi environment.

The dialog with the central directory 7 implies verifying if the recipient, as indicated by his phone number, is registered with the central directory 7 (or with an affiliated directory), or if a delayed transmission is admissible. If not, a communication over the connection-based network is initiated. If the phone number of the recipient 9 is registered in the central directory 7, the system then verifies if the current IP address of this recipient is known, which may be the case for example if the recipient 9 is itself in the personal area network of an access point, or if the recipient uses an Internet terminal registered by any other means with the central directory 7. Again, no voice over IP communication is possible when the current IP address of the called recipient 9 is not known, and in this case a switched connection over the network 8 must be initiated by the mobile station 1. In another embodiment, the communication of the recipient may occur over the Internet network 5 with a voice or data mail in the central directory 7 or in the usual access point of the recipient when the recipient is momentarily not present, and when the other criteria are fulfilled.

If the called recipient 9 is "present" (i.e., if its current Internet address can be retrieved by the central directory 7, or if a delayed communication over a voice/data mail box 71 is possible), the system then verifies supplementary criteria, including the above mentioned caller, recipient or default criteria stored in the central database 7. Verification of those criteria may imply acquisition of parameters from the caller's mobile station 1, from the terminal of the recipient 9, from the access point 3, from the Internet 5, from the cellular network 8, and/or from other systems. For example, the location of the caller may be retrieved from his mobile station 1 (for example if it includes a geolocational system), from the access point 3, or from the cellular network 8 in which the mobile station 1 is registered.

The system then decides, based on those criteria, if a voice over IP communication is possible and desirable. A negotiation mechanism may be provided if contradictory criteria have been set, for example, by the caller and recipient. Criteria may be prioritized, either by the users or automatically by the system, depending on the type or criteria, the date it has been introduced, the relevance to the call currently handled, the role of the user who set the criteria (caller criteria being preferably more important than the recipient's wishes), etc. Furthermore, the decision on a specific criteria may be non binary, and include a value in a multivalued range from "VoIP excluded" to "" VoIP mandatory". The final decision may be possibly based on a plurality of combined criteria.

The evaluation of the different criteria, and/or the making of a decision based on this evaluation, may be performed by the central directory 7, by the caller's mobile equipment or subscriber identification module, and/or in the access point 3; a sharing of the tasks between those devices is also possible. For example, some criteria may be verified by the central directory 7, others by the access point 3 or by the mobile station 1, and the final decision may be made by the module 10 in the mobile station 1 or in the subscriber identification module 11.

If a decision is made to build a communication over the connection-based network 8, the call control module is stopped and transmits the phone number entered by the user to the call establishment module, in order to build a regular communication. If, on the other end, it has been decided to build the communication over the Internet 5, the mobile station 1 -or the access point 3 - retrieves the IP or SIP address of the recipient 9 from the central directory 7, and establishes a communication over the PAN, the access point 3 and the Internet 5 with this recipient, whereas the packetization of the voice, in the case of a voice over IP communication, may occur either in the mobile station 1, 2 or in the access point 3.

The decision to establish a communication over the Internet or over the connection-based network is preferably seamless and transparent for the user, who does not even necessarily know what kind of network is currently used. In an embodiment, a confirmation is required by the module 11 before a decision is made. The software module 11 may also confirm the choice made with a text, graphic or spoken message.

Even if the communication is established over the Internet, it may be secured, i.e. cryptographically signed and/or encrypted, with the subscriber identification module 11 of the calling mobile device.

As already mentioned, the method of the invention may be used not only for voice communications, but also for data communications and transmission of short messages, for example SMS, MMS, instant mails or e-mails which may be immediately transferred over the Internet when the addressee is present in the system. In an embodiment, the SMS may be converted into an instant messaging system and conveyed to an Internet address, for example to the e-mail address, indicated in the central directory 7, in order to be displayed by the recipient's computer. If the recipient 9 has a mobile phone, the message transmitted over the Internet may be transformed back into a standard SMS by the application running in his terminal.

The method of the invention may also be used for accessing value-added services, for example speech services as provided by speech servers, multimodal services or data services, including access to an Internet service point for surfing the web or for retrieving and sending e-mails over a POP or SMTP mail server. Some services may be accessible only over one of the two possible channels; many will require a specific application, for example an e-mail client or a web or wap browser, to be run by the mobile equipment. Some services will be "always on", i.e. reachable at any time; users may establish a quasi-permanent session with some of those services, for example for retrieving e-mails immediately with a mail client or browser run by the mobile equipment.

If, on the other hand, the desired recipient is not present in his personal area network, the data message may be either transmitted immediately over the connection-based network 8, or temporarily stored in a data mail box in the sender's access point 3, in the central repository 7 or in the recipient usual access point. Delivery of a message stored in a mail box may be automatically triggered by the presence of the recipient in a participating PAN, so that the recipient will receive his communication immediately when he reaches his work place or when he returns home.

The caller may be requested to confirm if he accepts such a delayed transmission, or if he prefers an immediate transmission. In another embodiment, the caller may define default settings in his mobile station 1, and indicate for example that all SMS, or all data messages, to all recipients or only to some indicated recipients or types of recipients, should be immediately forwarded over the cellular network, or rather stored in a data mail box for later delivery to the recipient. A user may also define that a message should be transmitted over both channels. The price for the transmission over both channels may be different and this is preferably indicated to the user.

A user may also define that a message, a data or a voice mail should only be stored in a data or voice mail box during a maximal amount of time. If no transmission has been possible after expiration of this period, the data or voice message will be relayed from the mail box over the connection-based network to the recipient, either directly or over the caller's mobile station 1. A user may also voluntarily delay his message, and request for example a delivery only after 6pm, when the recipient is at home.

A message sent by a user may also include a program, for example a JAVA applet, or a Symbian or Pocket PC program, that will be automatically executed at reception by the receiving mobile equipment. The program may cause the mobile equipment of the recipient to adopt any appropriate behavior, for example to speak a message, to display an animation or to establish a wireless communication with a receiver in the PAN and cause any possible action. A program may for example cause the mobile equipment to start a TV-set in the PAN, and display some program or message on this TV set, immediately when the recipient returns home and reaches his PAN. Execution of the program will thus be triggered by the presence of the user in his PAN.

In an embodiment, a communication is established simultaneously over the connection-based network 8 and over the Internet 5 when certain conditions are met. For example, an audio communication may be immediately established over the connection-based network 8, and a simultaneous video communication over the Internet 5 when the recipient is present in his personal area network. The decision, made automatically, to establish such a simultaneous communication will also depend on the criteria stored in the central directory 7. In a multimodal interaction, voice may be transmitted over the connection-based network 8, and video streams, cursor displacements, keyboard entries, and other multimodal inputs and outputs, may be delivered over the Internet, if an Internet communication is possible and meets the criteria defined in the central directory 7. Beginning and end of the two communications over the two channels may be simultaneous or differed.

In an embodiment, the system of the invention also automatically decides on the bandwidth or quality of service that is to be used for the communication over the connection-based network or over the Internet. For example, the directory 7 may register that the recipient 9 does not have a UMTS-enabled mobile station, and thus prevent the calling mobile station from establishing a UMTS communication, rather using a GSM, GPRS or VoIP channel.

As already mentioned, criteria for deciding when communications should be established over the Internet and/or over the connection-based network 5 are be defined by the users themselves, in their role as recipients. In the embodiment, those criteria are entered using a web site preferably on the central directory 7, accessed from the mobile station 1 and/or from the user's access point 3. Identification and authentication of the user for the purpose of criteria edition is preferably performed with the same mechanism used for identification/authentication of the users wanting to establish or be able to receive a call, i.e. preferably using the subscribers' identification module 11 or biometric parameters.

Use of the services provided by the central directory 7 may be billed to the user of the calling mobile station, either as a flat fee for registration and/or renewal, as a function of the communication time or amount of data transferred, or indirectly through advertising displayed or spoken to the user during or before the communications.

### List of elements

- 1: Mobile station (for example, cellular telephone)
- 10: Call control module (for example, applet)
- 11: Subscriber Identification Module
- 2: Headset
- 3: Access point (for example: general purpose computer or appliance)
- 30: Application software run by the access point
- 31: VoIP codec (optional)
- 5: Internet
- 7: Central Directory
- 70: Database
- 71: Voice/data mail box
- 8: Connection-based network, for example a Public Land Mobile Network such as a GSM or UMTS network
- 9: Recipient (called terminal)

## Claims

1. A method for establishing a speech and/or data communication between a calling mobile station (1, 2) and a recipient (9), comprising the steps of:
providing in a central directory a plurality of criteria set or modified by said recipient over a web page,
connecting an access point (3) to the Internet (5),
establishing a direct local communication over a personal area network between said mobile station (1, 2) and said access point (3),
performing a verification in said central directory (7) in the Internet of the presence of said recipient (9),
retrieving in said central directory (9) said criteria depending on the recipient (9),
based on said verification and on said criteria, automatically deciding if a communication with said recipient (9) should be established over the Internet (5), using an address provided by said central directory (7), or over a connection-based network (8).

## Patentansprüche

1. Ein Verfahren zur Etablierung einer Sprach- und/oder Datenkommunikation zwischen einer anrufenden Mobilstation (1, 2) und einem Empfänger (9), umfassend die Schritte
Bereitstellung in einem zentralen Verzeichnis eine Vielzahl von Kriterien gesetzt oder modifiziert durch besagten Empfänger über eine Webseite,
Verbindung eines Zugangspunkts (3) mit dem Internet (5),
Aufbau einer direkten lokalen Kommunikation über ein persönliches Netzwerk zwischen besagter Mobilstation (1, 2) und besagten Zugangspunkt (3),
Durchführen einer Verifikation in besagtem zentralem Verzeichnis (7) im Internet der Präsenz des besagten Empfängers (9),
Abholen in besagtem Verzeichnis (9) besagte Kriterien in Abhängigkeit von dem Empfänger (9),
basierend auf besagter Verifikation und auf besagtem Kriterium automatische Entscheidung, ob eine Kommunikation mit besagtem Empfänger (9) über das Internet (5) unter Verwendung einer Adresse, die durch besagtes zentrale Verzeichnis (7) bereit gestellt wird, oder über ein verbindungsbasiertes Netzwerk (8) aufgebaut werden soll.

## Revendications

1. Une méthode pour établir une communication vocale et/ou de données entre une station mobile d'appel (1, 2) et un destinataire (9), comprenant les étapes :
mettre à disposition dans un répertoire central plusieurs critères définis ou modifiés par ledit destinataire par le biais d'une page internet,
se connecter par un point d'accès (3) à internet (5),
établir une communication locale directe par le biais d'un réseau domestique entre ladite station mobile (1, 2) et ledit point d'accès (3),
effectuer une vérification dans ledit répertoire central (7) sur internet de la présence dudit destinataire (9),
récupérer dans ledit répertoire (9) lesdits critères correspondant au destinataire (9),
en se basant sur ladite vérification et sur lesdits critères, décider automatiquement si une communication avec ledit destinataire (9) doit être établie par le biais d'internet (5), en utilisant une adresse fournie par ledit répertoire central (7), ou par le biais d'un réseau orienté connexion (8).
